# EUROPEAN PATENT SPECIFICATION

(11) **EP 1 441 471 B1**
(45) Date of publication and mention of the grant of the patent: **27.03.2013**
(21) Application number: 04001085.2
(22) Date of filing: 20.01.2004
(51) Int. Cl.: H04L 12/28, H04L 29/06

(54) **Remote control service processing device using GUI in home network environment**
Verarbeitungseinrichtung mit graphischer Benutzerschnittstelle (GUI) für ferngesteuerte Dienste in einem Heimnetzwerk
Dispositif de traitement avec interface graphique utilisateur (GUI) pour services télécommandés dans un réseau domotique

(30) Priority: 24.01.2003 KR 2003004913
(43) Date of publication of application: 28.07.2004
(73) Proprietor: Samsung Electronics Co., Ltd., Suwon-si, Gyeonggi-do, 443-742 (KR)
(72) Inventor: Choi, Moon-jeong, Yeongtong-dong, Suwon-si, Gyeonggi-do (KR)
(74) Representative: Grünecker, Kinkeldey, Stockmair & Schwanhäusser

(56) References cited:
- EP-A- 0 825 740
- EP-A- 1 069 695
- EP-A- 1 069 730
- WO-A2-98/59282
- US-A- 5 500 794
- US-A- 5 819 294
- US-A- 5 922 050
- US-A1- 2002 013 146
- CORCORAN P M ET AL: "BROWSER-STYLE INTERFACES TO A HOME AUTOMATION NETWORK" IEEE TRANSACTIONS ON CONSUMER ELECTRONICS, IEEE INC. NEW YORK, US, vol. 43, no. 4, November 1997 (1997-11), pages 1063-1069, XP000768559 ISSN: 0098-3063

## Description

### 1. Field of the invention

The present invention relates to a remote control service processing device, and more particularly, to a remote control service processing device which is capable of controlling various devices through a graphic user interface (GUI) in a home network environment.

### 2. Description of the Related Art

With a rapid development in the communication technology, the Internet has connected communications terminals around the world into one big network. Various digital information home appliances such as Internet refrigerator, digital TV, set top box which are designed to be accessible to the Internet are now widely used, and home networks, which connect these information home appliances into one network have also been introduced.

In order to connect the Internet with the home network, a home gateway is used inside the house. The home gateway provides various services for the mutual communications among the information home appliances in the house, and through the services provided, the user can grasp and even control the operational status of the respective appliances.

As the demand for a large screen as big as that of a theater for home use has also been increasing, a so-called 'home theater' has been introduced. The home theater mainly consists of a plasma display panel (PDP), a DVD player, an AV amp, a set-top box (STB) and a plurality of speakers as one system, and these components are organically connected with one another. The respective components of the home theater also participates as one element of the home network.

However, although the various components are organically connected in a system such as home theater, an operator of the system still experiences inconvenience because he/she has to manipulate the respective components using a separate remote controller following predetermined steps. For example, in order to watch the DVD instead of TV, the operator first has to manipulate a remote controller for the STB and another remote controller for AMP before manipulating the remote controller for the DVD player.

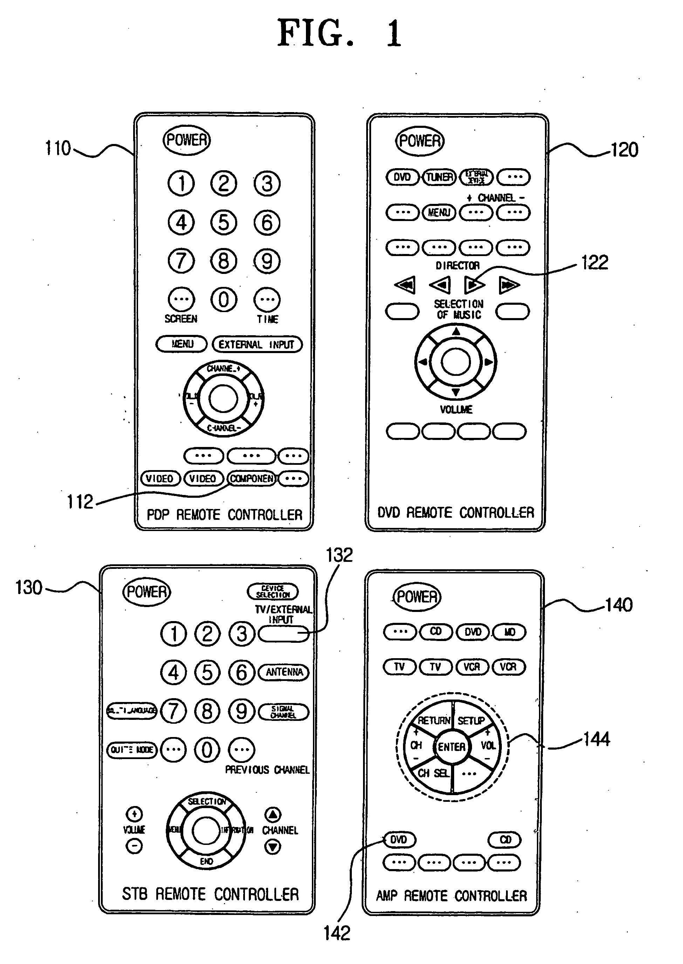

FIG. 1 is a view for explaining a manipulation method of remote controllers in order to use the DVD player instead of TV. More specifically, FIG. 1 illustrates a PDP remote controller 110, a DVDP remote controller 120, a STB remote controller 130 and an AMP remote controller 140. In a state that all of the PDP, STB, DVDP and AMP are on, the operator wishing to use the DVD instead of TV selects a component key 112 through the PDP remote controller 110 and thus selects image output. Next, the operator selects a TV/external input key 132 through the STB remote controller 130 and thus sets external input. Then the operator selects a DVD key 142 of the AMP remote controller 140, and selects a reproducing key 122 of the DVDP remote controller 120. After that, the operator adjusts DVD reproducing environments such as a volume through the use of environment setting keys 114 of the AMP remote controller 140.

As described above, the operator of the conventional home theater system is required to manipulate not only the current remote controller but also the other remote controllers in order to change the operating device to another one. This makes the manipulation process complicated, and as the manipulating of the system is complicated, the operator rather chooses to use a certain one fixedly rather than to enjoy various functions of the system.

In an attempt to solve the problems as described above, many distributors have tried to develop an integrated remote controller. However, the distributors suffer from high research and developing costs, while the customers also suffer from the financial burden of having to purchase a high-priced integrated remote controller, separately. For the customers who use components of a home theater system from different distributors, using an integrated remote controller is still more inefficient.

Furthermore, the operator of the home theater system can use the remote controllers or integrated form of them somewhat efficiently in an environment where the respective components are installed near to one another. However, if the components are installed rather remotely from each other, a remote controller loses its usefulness.

US 2002/0013146 A1 discloses an apparatus for controlling several devices used in domestic and functional buildings. This system is provided with a base station that is operable by one or several terminals in order to control several devices. The control devices transmit information signals to the base station concerning present switching and control processes, i.e. information relating to the status of the controlled devices. However, this conventional system can still be improved with respect to a comfortable operation.

The object to address and overcome the above described problems is solved by a remote control service processing device with the features of claim 1. Advantageous embodiments of the invention are referred to in the dependent claims.

In an effort to solve the problems as described above, it is an aspect of the present invention to provide a remote control service processing device which is capable of providing a remote control service through a graphic user interface (GUI) in a home network environment, and replacing an integrated remote controller of home appliances of the home network.

In order to achieve the above aspect and/or other features of the present invention, a remote control service processing device in a home network environment, comprises an interface for a data exchange with plural types of devices which are designed to respond to a remote control command received through the network, a storage unit for storing remote control service list information which represents a function responding to a remote controller of the respective devices connected in the network, and a control unit for collecting the remote control service list information from the respective devices, storing the collected information in the storage unit, and providing a certain device in the network with a remote control service to remote control one among the respective devices through a graphic user interface (GUI).

The control unit comprises a database server for collecting the remote control service list information and managing the collected information, and a remote control proxy server for providing the certain device with the remote control service in accordance with the remote control service list information

### SUMMARY

In an effort to solve the problems as described above, it is an aspect of the present invention to provide a remote control service processing device which is capable of providing a remote control service through a graphic user interface (GUI) in a home network environment, and replacing an integrated remote controller of home appliances of the home network.

In order to achieve the above aspect and/or other features of the present invention, a remote control service processing device in a home network environment, comprises an interface for a data exchange with plural types of devices which are designed to respond to a remote control command received through the network, a storage unit for storing remote control service list information which represents a function responding to a remote controller of the respective devices connected in the network, and a control unit for collecting the remote control service list information from the respective devices, storing the collected information in the storage unit, and providing a certain device in the network with a remote control service to remote control one among the respective devices through a graphic user interface (GUI).

The control unit comprises a database server for collecting the remote control service list information and managing the collected information, and a remote control proxy server for providing the certain device with the remote control service in accordance with the remote control service list information collected through the database server. Upon receiving from the certain device a request for the remote control through the remote control service, the remote control proxy server reads a remote control command from the database server in accordance with the remote control request, and transmits the remote control command to the corresponding device.

The database server maps an icon in correspondence with each device. The icon may be received from the respective devices together with the remote control service list information and mapped. Alternatively, icons may be provided for the plurality of devices for use at home, and mapped if the corresponding devices are connected through the network.

The remote control proxy server provides the remote control service so as to enable the certain device to select through the icon a device for remote control. The remote control proxy server provides an icon representation selection tool as the remote control service, with which a user can selectively display the icon. When the information regarding the selection of an icon is received from the certain device, the remote control proxy server provides the remote control service so that a remote control service page can be displayed to display the remote control service list of the device corresponding to the icon.

The remote control proxy server provides the certain device with a remote control service selection item in the form of a list together with the other available services. When the information regarding the selection from the remote control service item is received from the service list, the remote control proxy server provides a remote control service setting menu for the user to set functions of the respective devices in the network, and a first remote control service page for displaying a remote control service provision menu for the functions of the devices registered through the remote control service setting menu.

When the information regarding the selection from the remote control service setting menu is received, the remote control proxy server provides a second remote control service page which matches the function lists of the respective devices with the devices and represents the result. When a control signal is input in accordance with the function selection of the respective devices in a state that the second remote control service page is displayed, the remote control proxy server provides the remote control service so that a function corresponding to the control signal among the remote control service list displayed on the second remote control service page can be represented in marking. The remote control proxy server further provides the second remote control service page with a confirm button for confirming the setting completion with respect to the selected function. When the confirm button is selected, the database server generates a new identifier with respect to the functions in marking and the respective devices, matches and registers the functions in marking with the generated identifier. The database server registers the identifier as a device identifier. When the remote control service provision menu is selected, the remote control proxy server provides a third remote control service page so that the devices registered in the database server can be displayed. When the information regarding a remote control request is received from the certain device to the device which is newly registered with the identifier, the remote control proxy server transmits the remote control command sequentially and at a predetermined time interval to one or respective devices with respect to the functions matched and registered with the identifier.

Meanwhile, when information regarding the selection from the remote control service setting menu is received, unlike the case mentioned above, the remote control proxy server may provide a fourth remote control service page to separately display the device corresponding to the control signal in accordance with the function selection of the respective device, and the functions corresponding to the control signal. In this case, the remote control proxy server further provides a confirm button for confirming the completion of setting with respect to a function selected from the second remote control service page. When the confirm button is selected, the database server generates a new identifier with respect to the displayed device and function in accordance with a control signal regarding the selection of the device function, and matches and registers it with the generated identifier. The database server registers the identifier as a device identifier. When the information is received regarding a remote control request with respect to a device which is newly registered with the identifier, the remote control proxy server transmits the remote control command to one or respective devices sequentially and at a predetermined time interval with respect to the function which is matched and registered with the identifier.

The certain device is a device having a display, and the remote control service processing device as mentioned above may operate as the certain device in the home network environment.

With the remote control service processing device according to the present invention, instead of complicated manipulation of several remote controllers or a complex remote controller, a user can control a remote device in a home network environment having different devices through the GUI from a device having a display. Further, a selection item, realized as a hot-key through the use of GUI, can replace a series of complicated processes using plural remote controllers.

### BRIEF DESCRIPTION OF THE DRAWINGS

The above aspects and other features of the present invention will become more apparent by describing in detail an embodiment thereof with reference to the attached drawings, in which:
FIG. 1 is a view for explaining manipulating steps of a remote controller for a conventional home theater system;
FIG. 2 is a block diagram of a remote control service processing device according to an embodiment of the present invention;
FIG. 3 is a flowchart of remote control service processing operation of the remote control service processing device of FIG. 2 according to an embodiment of the present invention;
FIG. 4 is a flowchart of remote control service menu setting operation of the remote control service processing device of FIG. 2 according to another embodiment of the present invention;
FIG. 5 is a flowchart of executing the selection made by the remote control service menu selection setting operation of FIG. 4; and
FIGS. 6 through 9 are views illustrating the screen of a display device according to the remote control service of the remote control service processing device of FIG. 2.

### DETAILED DESCRIPTION OF THE INVENTION

Hereinafter, the present invention will be described in detail with reference to the accompanying drawings.

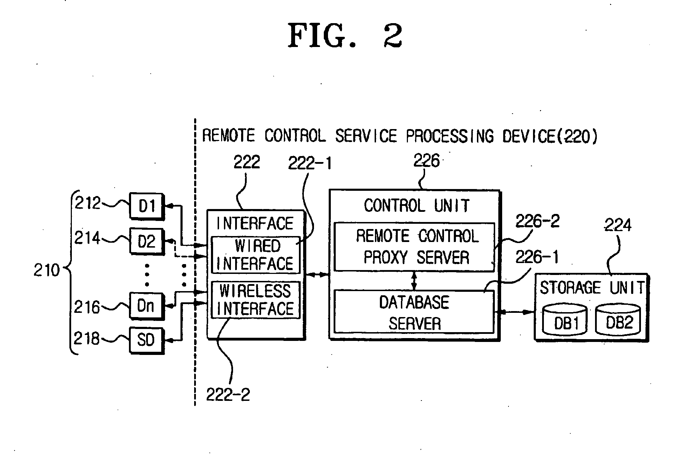

Referring to FIG. 2, a remote control service processing device 220 according to one embodiment of the present invention includes an interface 222, a storage unit 224 and a control unit 226.

The interface 222 includes a wired interface 222-1 for data exchange with a wired communication device such as D1 212, ........, Dn 216, and SD 218, and a wireless interface 222-2 for data exchange with the wireless communication devices such as D2 214. The respective devices D1, ......., Dn, SD have information about currently used functions of the remote controller in the form of lists, and respond to a remote control command received through the network.

The storage unit 224 matches remote control service list information, i.e., the functions of the wired and wireless communication devices D1, ...., Dn, SD responding to the corresponding remote controllers, and stores the same.

The control unit 226 includes a database server 226-1 and a remote proxy server 226-2, and controls the overall operation of the system. Especially, the control unit 226 communicates with, and thus collects the remote control service list information of the respective devices D1, ...., Dn, provides a certain device SD with the information about the respective devices D1, ..., Dn, and upon receiving a remote control request from the certain device SD, transmits a remote control command to the corresponding device based on the collection of the remote control service list information.

The database server 226-1 collects remote control service lists from the respective devices D1, ...., Dn, and builds and manages a first database DB1 based on the collected information. The database server 226-1 also generates new remote control service list information through the communication with the certain device SD, and generates a second data base DB2, or updates the first database DB1 and manages the same based on the newly generated remote control service list information. FIG. 2 shows the first and the second separate databases DB1, DB2 for the respective storage of information. However, it is also possible that the information of the first and the second databases DB1, DB2 is combined into a single database.

The remote controller proxy server 226-2 provides the certain device SD with a remote control service so that the respective devices D1, ...., Dn connected to the network can perform remote control command through the graphic user interface GUI with reference to the first database DB1. The remote control service is provided in icon form, and web page form. When a remote control request is received from the certain device SD through the remote control service, the remote controller proxy server 226-2, in response to the remote control request, transmits a remote control command to a corresponding device 210 with reference to the first or the second database DB1 or DB2.

Here, the 'certain device SD' refers to a display device such as a PDP, by which a user can receive remote control service through a screen, and also input various commands through input tools such as a mouse, keyboard or a remote controller for the certain device. The remote control service processing device 220 may act as the certain device 218.

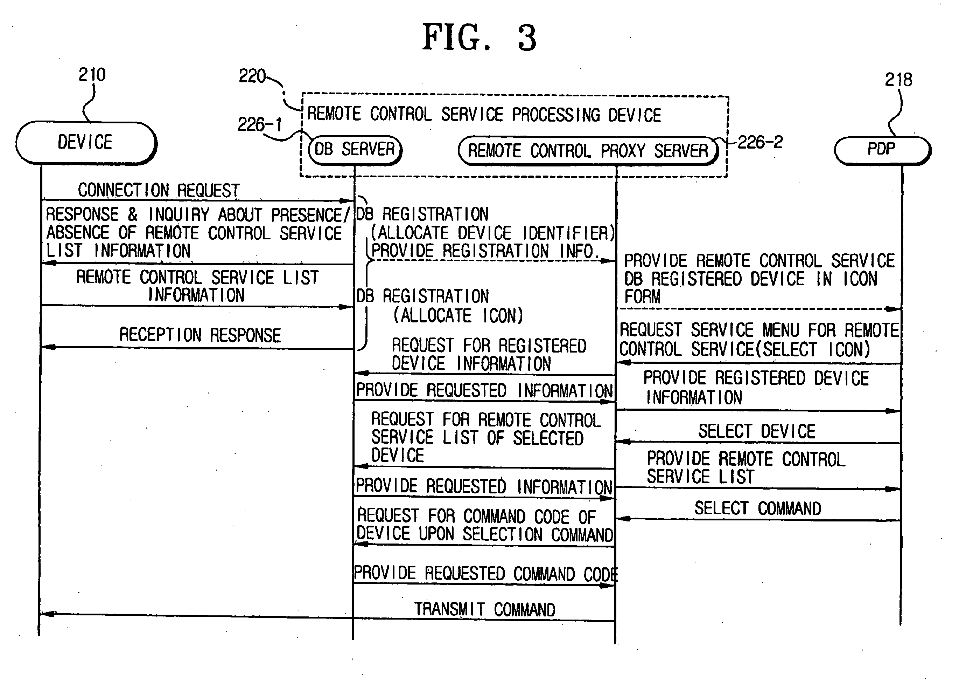

FIG. 3 is a view showing a signal flow in order to explain a remote control service processing operation of the remote control service processing device 220 of FIG. 2 in accordance with one embodiment of the present invention. First, as a connect request is transmitted from a device 210 connected to the network, the DB server 226-1 of the remote control service processing device 220 sends back a response message to the connect request, and inquires whether there is the remote control service list information. When the device information and remote control service list information are received from the device 210, the DB server 226-1 sends out a response message about the message reception, and also matches the device information and the remote control service list information to register in the first database DB1. When registering the device information and the remote control service list in the first database, an icon corresponding to the device 210 may be mapped. The icon may be received from the respective devices 210 together with the remote control service list information, or alternatively, the remote control service processing device 220 possesses predetermined icons for the plurality of devices used in home and then they are mapped when a corresponding device is connected through the network.

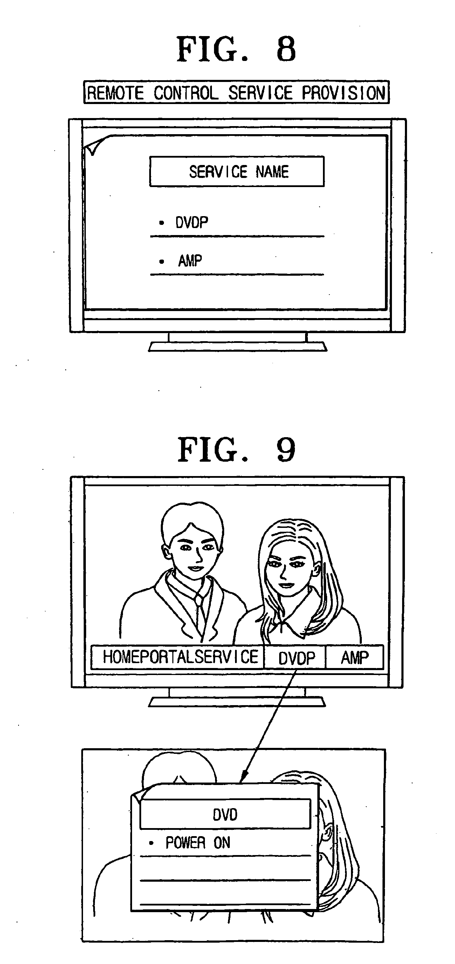

When the database is built with respect to the respectively connected devices, the remote controller proxy server 226-2 of the remote control service processing device 220, i.e., the device having a display (hereinafter called PDP 218) provides the remote control service in the form of an icon (see FIG. 9). When the DVDP is selected as shown in FIG. 9, a menu of available remote control services of the DVDP is displayed as shown in the lower half of FIG. 9. FIG. 9 shows the 'Power on' item by way of an example, however, various control items can also be displayed. Further, in addition to the icon, the remote control proxy server 226-2 may also provide an icon representation selection tool (not shown) for the user to choose whether to show the icons of FIG. 9 on the screen or not.

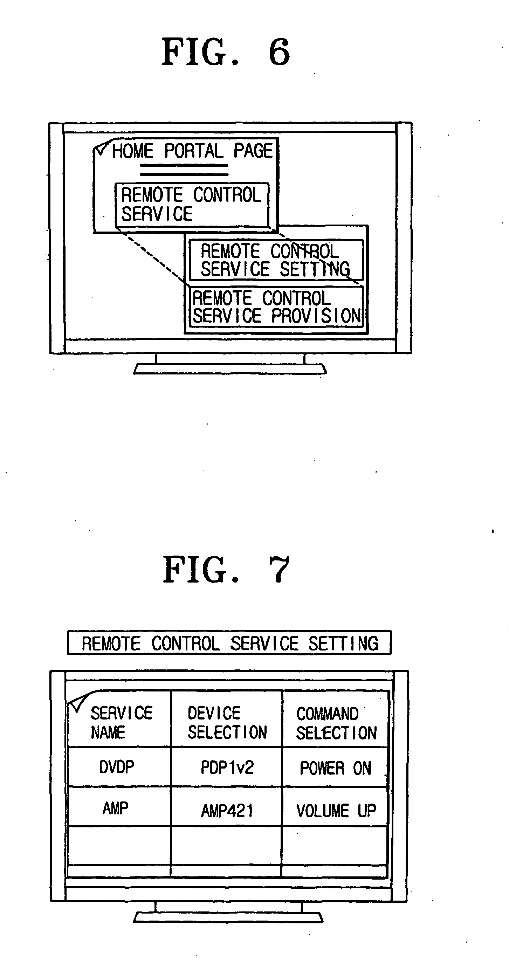

Meanwhile, when information is received following the selection of the remote control service on the service menu page by the remote control proxy server of FIG. 6, for example, when the home portal service is selected as shown in FIG. 9, or when a service menu display is requested by the input through the service menu key of the input tool or by placing a mouse pointer on a certain point of the screen, the remote control proxy server 226-2 sends a request to the DB server 226-1 for the information about the devices registered in the first DB, DB 1. When the requested information is provided by the DB server 226-1, the remote control proxy server 226-2 provides the PDP 218 with the lists about the registered devices. Next, when the information is received following the selection of a certain device among the lists provided by the PDP 218, the remote control proxy server 226-2 sends an inquiry to the DB server 226-1 about the remote control service list of the selected device and provides the same to the PDP 218. When the information is received from the PDP 218, following the selection of one item among the remote control service list, a command code corresponding to the received information is read, and transmitted to the corresponding device 210.

The device 210, upon receiving the command code as described above, transmits a remote control command to the control unit (not shown) of the device 210 in accordance with the received command code, and therefore, the control unit of the device 210 performs the function in the same way as it is instructed through the remote controller.

Meanwhile, when the remote control proxy server 226-2 provides the PDP 218 with the information about the devices registered in the database, the remote control proxy server 226-2 may match the information with the respective devices and provide the remote control service page so that the respective functions can be displayed together. Then, when the functions of several devices are selected by the user simultaneously and the selection confirm signal is received, the remote control proxy server 226-2 may register the functions of the selected devices in the database as new devices or identifiers so that, upon receiving a remote control request for a new device or an identifier, the remote control proxy server 226-2 can sequentially transmit the commands which are mapped according to the new devices and functions at predetermined time intervals. As a result, a single selection command can replace plural times of manipulation of multiple remote controllers (see e.g. Figure 1) to operate plural devices of a combination system such as a 'home theater' system.

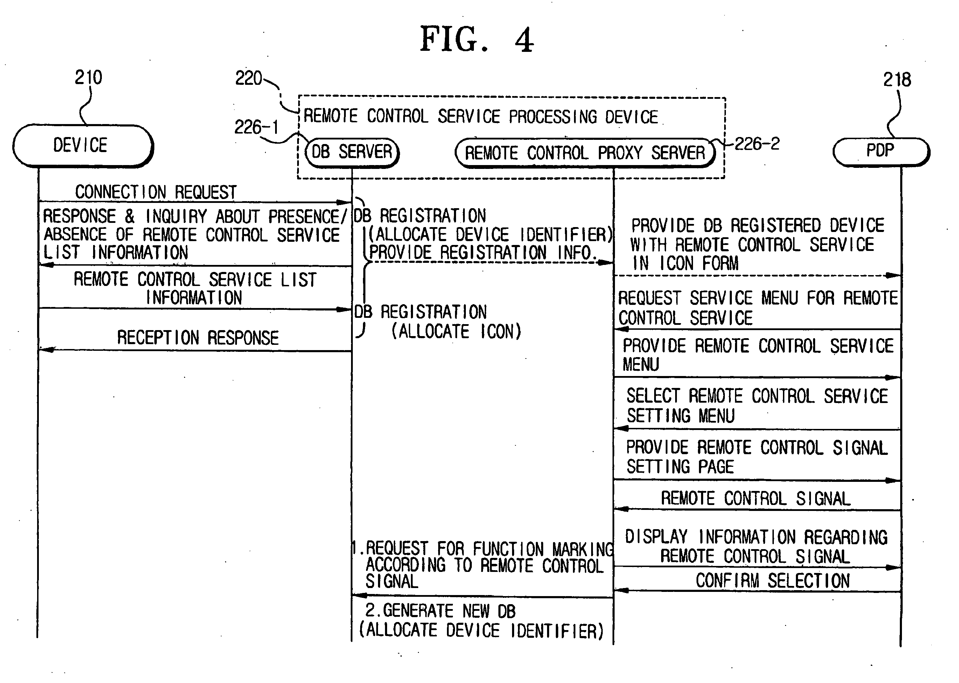

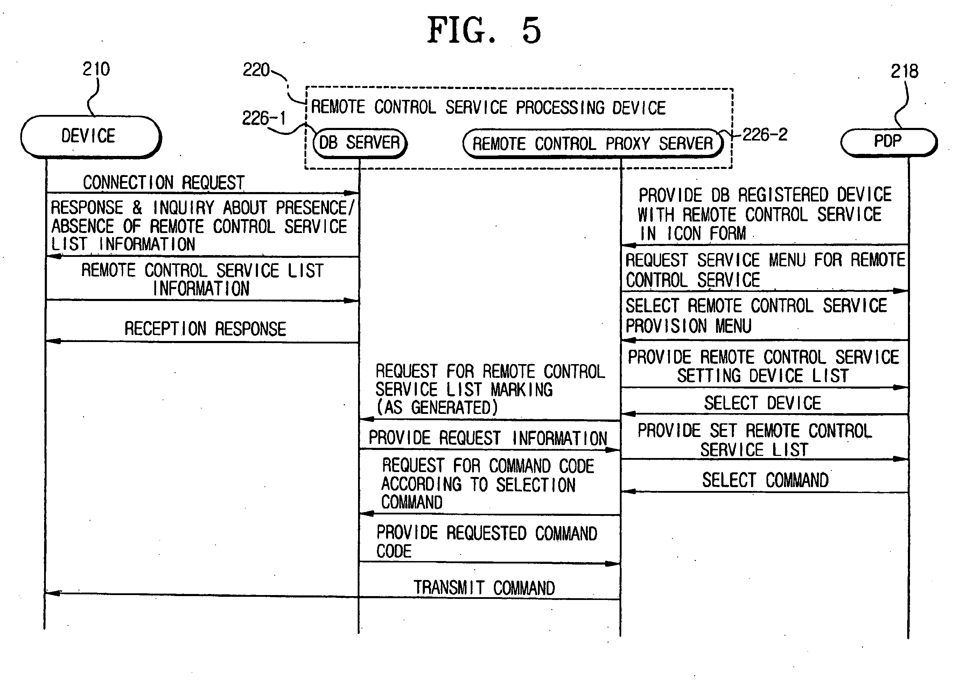

FIGS. 4 and 5 show flow of signals in the remote control service processing operation of the remote control service processing device 220 of FIG. 2 according to another embodiment of the present invention. FIG. 4 shows a signal flow in the process of setting user's frequently used functions of the devices connected in the network, and FIG. 5 shows a signal flow in the executing of the selection made by the remote control service menu selection setting operation of FIG. 4. In FIGS. 4 and 5, data processing the remote control service lists collected from the devices connected in the network into database is identical to the same process as described above with reference to FIG. 3. Accordingly, detailed description thereof will be omitted.

Referring to FIG. 4, when the information is received in accordance with the selection on the remote control service from the service menu page having lists of available services, as shown in FIG. 6, the remote control proxy server 226-2 provides the remote control service menu page. When the remote control service selection menu is selected from the PDP 218, the remote control proxy server 226-2 provides the remote control signal setting page as shown in FIG. 7. At this time, a confirm button (not shown) is additionally provided to the remote control signal setting page to instruct the completion of the remote control setting. After that, when the control signal is received, following the selection of a certain function through an input tool, the remote control proxy server 226-2 causes the device and function corresponding to the received control signal to be displayed on the screen, and upon receiving the information in accordance with the user's selection of the confirm button, establishes the database in accordance with the control signal as selected through the input tool. FIG. 7 is a view illustrating the screen displayed in accordance with the control signal selected through the DVD remote controller and the AMP remote controller.

Meanwhile, in FIG. 4, in building a database directly through the remote controller, device identifiers are generated with respect to the devices and the functions which are displayed in accordance with the control signal inputted through the input tool, and the device identifier are matched and registered in the second database as the devices having new service names or previous service names. In the case of selecting functions of various devices, the functions can be registered as a new device service name, and in case of selecting plural functions of one device, the functions can be registered under the service names of the corresponding device. There is another way of building a database, in which marking is performed in the remote control service lists of the devices in accordance with the control signal selected among the previously-built first database. The marking information is matched with the new device identifiers and registered in the first database as new devices, to thereby build the database. In the first and the second way of building the database, when the new devices or the identifiers are registered in the database together with the remote control service lists icons, corresponding to the registered devices, may be mapped. With respect to the devices that are newly generated through the identifiers, preset icons may be applied. With respect to the already registered devices, the corresponding icons may be displayed or new icons may be applied among the preset icons.

While the database is built as described above, the remote control proxy server 226-2 may display the icons (not shown) for the device identifiers which are newly generated during the screen display of the PDP 218 (FIG. 9).

Meanwhile, after the remote control service setting menu is newly registered through the process as shown in FIG. 4, as a remote control service provision item is selected from the second screen of FIG. 6, the remote control proxy server 226-2 provides a page so that the list of registered devices of the first database or of the newly generated second database can be displayed on the screen. Then with a selection of a certain device, the remote control proxy server 226-2 requests through the database server 226-1 for the remote control service list information of the registered devices of the database, and upon selection of a certain item from the remote control service list, reads a command code from the database according to the selection command and transmits the read data to the corresponding device 210. When a newly registered device under a new service name is selected from the second database, i.e., when plural functions of plural devices are selected through plural remote controllers, the remote control proxy server 226-2 sequentially transmits the read command codes to corresponding devices at predetermined time intervals.

The device 210 receiving the command code transmits a remote control command to a built-in control unit (not shown) according to the received command code, and the control unit performs the function in the same way as it is instructed through the remote controller for the device 210.

With the remote control service processing device as described above, a user can control a remote device in a home network environment having different devices through the GUI, or control the respective devices of a combination type system. As a result, a manufacturer's heavy burden of having to develop an integrated remote controller is lessened, and on the customer's part, they have less financial burden of having to buy the integrated remote controller, which is usually expensive.

Further, a selection item, realized as a hot-key through the use of GUI, can replace a series of complicated processes using plural remote controllers. Accordingly, user convenience is improved, and system utilization is also improved.

## Claims

1. A remote control service processing device (220) in a home network environment, comprising:
an interface (222) for a data exchange between a plurality of types of devices (210) which are designed to respond to a remote control command received through the network;
a storage unit (224) which stores a remote control service list information which represents a function responding to a remote controller of the respective devices (210) connected in the network; and
a control unit (226) which is adapted to collect the remote control service list information from the respective devices (210), to store the collected remote control service list information in the storage unit (224), and to provide a certain device (218) in the network with a remote control service to remote control at least one of the respective devices (210) through a graphic user interface,
wherein the control unit (226) comprises a remote control proxy server (226-2) adapted to match information in the storage unit (224) with the respective devices (210), and to provide a remote control service page so that respective functions can be displayed together,
and the remote control proxy server (226-2) is further configured to register, when the functions of several devices are selected by the user simultaneously and the selection confirm signal is received, the functions of the selected devices in the storage unit (224) as new devices or identifiers, such that a single selection command can replace plural times of manipulation of remote controllers to operate plural devices (210).

2. The remote control service processing device of claim 1, wherein the control unit (226) comprises:
a database server (226-1) which collects the remote control service list information and manages the collected information;
wherein the remote control proxy server (226-2) which provides the certain device (218) with the remote control service in accordance with the remote control service list information collected through the database server (226-1), and upon receiving from the certain device (218) a request for the remote control through the remote control service, reads a remote control command from the database server (226-1) in accordance with the remote control request, and transmits the remote control command to the corresponding device (210).

3. The remote control service processing device of claim 2, wherein the database server (226-1) maps an icon in correspondence with each device (210).

4. The remote control service processing device of claim 3, wherein the remote control proxy server (226-2) provides the remote control service so as to enable the certain device (218) to select through the icon a device (210) for remote control.

5. The remote control service processing device of claim 4, wherein the remote control proxy server (226-2) provides an icon representation selection tool as the remote control service, with which a user can selectively display the icon.

6. The remote control service processing device of claim 5, wherein, when an information regarding the selection of the icon is received from the certain device (218), the remote control proxy server (226-2) provides the remote control service so that a remote control service page can be displayed to display the remote control service list of the device (210) corresponding to the icon.

7. The remote control service processing device of claim 2, wherein the remote control proxy server (226-2) provides the certain device (218) with a remote control service selection item in the form of a list together with other available services.

8. The remote control service processing device of claim 7, wherein, when an information regarding the selection from the remote control service item is received from the service list, the remote control proxy server (226-2) provides a remote control service setting menu for the user to set functions of the respective devices (210) in the network, and provides a first remote control service page for displaying a remote control service provision menu for the functions of the devices (210) registered through the remote control service setting menu.

9. The remote control service processing device of claim 8, wherein, when an information regarding the selection from the remote control service setting menu is received, the remote control proxy server (226-2) provides a second remote control service page which matches the function lists of the respective devices (210) with the devices (210) and represents the result.

10. The remote control service processing device of claim 9, wherein, when a control signal is input in accordance with the function selection of the respective devices (210) in a state that the second remote control service page is displayed, the remote control proxy server (226-2) provides the remote control service so that a function corresponding to the control signal among the remote control service list displayed on the second remote control service page can be represented in marking.

11. The remote control service processing device of claim 10, wherein the remote control proxy server (226-2) further provides the second remote control service page with a confirm button for confirming the setting completion with respect to the selected function, and
when the confirm button is selected, the database server (226-1) generates a new identifier with respect to the functions in marking and the respective devices (210), matches and registers the functions in marking with the generated identifier.

12. The remote control service processing device of claim 11, wherein the database server (226-1) registers the identifier as a device identifier.

13. The remote control service processing device of claim 12, wherein, when the remote control service provision menu is selected, the remote control proxy server (226-2) provides a third remote control service page so that the devices (210) registered in the database server are displayed.

14. The remote control service processing device of claim 13, wherein, when an information regarding a remote control request is received from the certain device (218) to the device (210) which is newly registered with the identifier, the remote control proxy server (226-2) transmits the remote control command sequentially and at a predetermined time interval to at least one of the respective devices (210) with respect to the functions matched and registered with the identifier.

15. The remote control service processing device of claim 8, wherein, when an information regarding the selection from the remote control service setting menu is received, the remote control proxy server (226-2) provides a fourth remote control service page to separately display the device (210) corresponding to the control signal in accordance with the function selection of the respective device (210), and the functions corresponding to the control signal.

16. The remote control service processing device of claim 15, wherein the remote control proxy server (226-2) further provides a confirm button for confirming the completion of setting with respect to a function selected from the second remote control service page, and
when the confirm button is selected, the database server (226-1) generates a new identifier with respect to the displayed device (210) and function in accordance with a control signal regarding the selection of device function, and matches and registers said displayed device (210) and function with the generated identifier.

17. The remote control service processing device of claim 16, wherein the database server (226-1) registers the identifier as a device identifier.

18. The remote control service processing device of claim 17, wherein, when an information is received regarding a remote control request with respect to a device (210) which is newly registered with the identifier, the remote control proxy server (226-2) transmits the remote control command to at least one of the respective devices (210) sequentially and at a predetermined time interval with respect to the function which is matched and registered with the identifier.

19. The remote control service processing device of claim 18, wherein, when the remote control service provision menu is selected, the remote control proxy server (226-2) provides the remote control service so that the devices (210) registered through the database server (226-1) can be displayed.

20. The remote control service processing device of claim 19, wherein the database server (226-1) maps an icon for each device (210).

21. The remote control service processing device of claim 20, wherein the remote control proxy server (226-2) provides the remote control service so that the certain device (218) can select the icon of one of said devices (210) wanted for remote control during the execution of the function of the certain device (218).

22. The remote control service processing device of claim 21, wherein, when an information regarding the selection of one of said icons is received from the certain device (218), the remote control proxy server (226-2) provides a fifth remote control service page so that the device (210) and the function corresponding to the selected icon can be matched with each other and displayed.

23. The remote control service processing device of claim 1, wherein the certain device (218) is a device having a display.

24. The remote control service processing device of claim 23, wherein said remote control service processing device is said certain device (218).

## Patentansprüche

1. Fernbedienungsdienst-Verarbeitungsgerät (220) in einer Heimnetzwerk-Umgebung, das umfasst:
eine Schnittstelle (222) für einen Datenaustausch zwischen einer Vielzahl von Typen von Geräten (210), die so eingerichtet sind, dass sie auf einen über das Netzwerk empfangenen Fernbedienungsbefehl ansprechen;
eine Speichereinheit (224), die eine Fernbedienungsdienst-Listeninformation speichert, die eine Funktion repräsentiert, die auf eine Fernbedienungseinrichtung der jeweiligen mit dem Netzwerk verbundenen Geräte (210) anspricht; und
eine Steuereinheit (226), die so eingerichtet ist, dass sie die Fernbedienungsdienst-Listeninformationen von den jeweiligen Geräten (210) erfasst, die erfassten Fernbedienungsdienst-Listeninformationen in der Speichereinheit (224) speichert und einem bestimmten Gerät (218) in dem Netzwerk einen Fernbedienungsdienst bereitstellt, um wenigstens eines der jeweiligen Geräte (210) über eine grafische Benutzerschnittstelle fernzubedienen,
wobei die Steuereinheit (226) einen Fernbedienungs-Proxy-Server (226-2) umfasst, der so eingerichtet ist, dass er Informationen in der Speichereinheit (224) mit den jeweiligen Geräten (210) abgleicht und eine Fernbedienungsdienst-Seite bereitstellt, so dass jeweilige Funktionen zusammen angezeigt werden können,
und der Fernbedienungs-Proxy-Server (226-2) des Weiteren so konfiguriert ist, dass er, wenn die Funktionen mehrerer Geräte von dem Benutzer gleichzeitig ausgewählt werden und das Auswahlbestätigungs-Signal empfangen wird, die Funktionen der ausgewählten Geräte in der Speichereinheit (224) als neue Geräte oder Kennungen registriert, so dass ein einziger Auswahl-Befehl mehrere Betätigungsvorgänge von Fernbedienungseinrichtungen zum Betätigen mehrerer Geräte (210) ersetzen kann.

2. Fernbedienungsdienst-Verarbeitungsgerät nach Anspruch 1, wobei die Steuereinheit (226) umfasst:
einen Datenbank-Server (226-1), der die Fernbedienungsdienst-Listeninformationen erfasst und die erfassten Informationen verwaltet;
wobei der Fernbedienungs-Proxy-Server (226-2), der dem bestimmten Gerät (218) den Fernbedienungsdienst entsprechend dem über den Datenbank-Server (226-1) erfassten Fernbedienungsdienst-Listeninformationen bereitstellt, beim Empfang einer Anforderung der Fernbedienung über den Fernbedienungsdienst von dem bestimmten Gerät (218) einen Fernbedienungsbefehl von dem Datenbank-Server (226-1) entsprechend der Fernbedienungsanforderung liest und den Fernbedienungsbefehl zu dem entsprechenden Gerät (210) sendet.

3. Fernbedienungsdienst-Verarbeitungsgerät nach Anspruch 2, wobei der Datenbank-Server (226-1) ein Icon in Entsprechung zu jedem Gerät (210) zuordnet.

4. Fernbedienungsdienst-Verarbeitungsgerät nach Anspruch 3, wobei der Fernbedienungs-Proxy-Server (226-2) den Fernbedienungsdienst so bereitstellt, dass das bestimmte Gerät (218) befähigt wird, ein Gerät (210) für Fernbedienung über das Icon auszuwählen.

5. Fernbedienungsdienst-Verarbeitungsgerät nach Anspruch 4, wobei der Fernbedienungs-Proxy-Server (226-2) ein Icon-Darstellungs-Auswahlwerkzeug als den Fernbedienungsdienst bereitstellt, mit dem ein Benutzer das Icon selektiv anzeigen kann.

6. Fernbedienungsdienst-Verarbeitungsgerät nach Anspruch 5, wobei, wenn eine Information bezüglich der Auswahl des Icon von dem bestimmten Gerät (218) empfangen wird, der Fernbedienungs-Proxy-Server (226-2) den Fernbedienungsdienst so bereitstellt, dass eine Fernbedienungsdienst-Seite angezeigt werden kann, um die Fernbedienungsdienst-Liste des Gerätes (210) anzuzeigen, die dem Icon entspricht.

7. Fernbedienungsdienst-Verarbeitungsgerät nach Anspruch 2, wobei der Fernbedienungs-Proxy-Server (226-2) des bestimmten Gerätes (218) ein Fernbedienungsdienst-Auswahlobjekt in Form einer Liste zusammen mit anderen verfügbaren Diensten bereitstellt.

8. Fernbedienungsdienst-Verarbeitungsgerät nach Anspruch 7, wobei, wenn eine Information bezüglich der Auswahl aus dem Fernbedienungsdienst-Objekt von der Dienst-Liste empfangen wird, der Fernbedienungs-Proxy-Server (226-2) für den Benutzer ein Fernbedienungsdienst-Einstellmenü zum Einstellen von Funktionen der jeweiligen Geräte (210) in dem Netzwerk bereitstellt und eine erste Fernbedienungsdienst-Seite zum Anzeigen eines Fernbedienungsdienst-Bereitstellungsmenüs für die über das Fernbedienungsdienst-Einstellmenü registrierten Funktionen der Geräte (210) bereitstellt.

9. Fernbedienungsdienst-Verarbeitungsgerät nach Anspruch 8, wobei, wenn eine Information bezüglich der Auswahl aus dem Fernbedienungsdienst-Einstellmenü empfangen wird, der Fernbedienungs-Proxy-Server (226-2) eine zweite Fernbedienungsdienst-Seite bereitstellt, die die Funktions-Listen der jeweiligen Geräte (210) mit den Geräten (210) abgleicht und das Ergebnis darstellt.

10. Fernbedienungsdienst-Verarbeitungsgerät nach Anspruch 9, wobei, wenn ein Steuerungs-Signal entsprechend der Funktionsauswahl der jeweiligen Geräte (210) in einem Zustand ausgegeben wird, in dem die zweite Fernbedienungsdienst-Seite angezeigt wird, der Fernbedienungs-Proxy-Server (226-2) den Fernbedienungsdienst so bereitstellt, dass eine Funktion, die dem Steuerungs-Signal aus der Fernbedienungsdienst-Liste entspricht, die auf der zweiten Fernbedienungsdienst-Seite angezeigt wird, gekennzeichnet dargestellt werden kann.

11. Fernbedienungsdienst-Verarbeitungsgerät nach Anspruch 10, wobei der Fernbedienungs-Proxy-Server (226-2) des Weiteren die zweite Fernbedienungsdienst-Seite mit einer Bestätigungs-Schaltfläche zum Bestätigen des Abschlusses der Einstellung in Bezug auf die ausgewählte Funktion bereitstellt, und
wenn die Bestätigungs-Schaltfläche ausgewählt wird, der Datenbank-Server (226-1) eine neue Kennung in Bezug auf die gekennzeichneten Funktionen und die jeweiligen Geräte (210) erzeugt, und die gekennzeichneten Funktionen abgleicht und mit der erzeugten Kennung registriert.

12. Fernbedienungsdienst-Verarbeitungsgerät nach Anspruch 11, wobei der Datenbank-Server (226-1) die Kennung als Geräte-Kennung registriert.

13. Fernbedienungsdienst-Verarbeitungsgerät nach Anspruch 12, wobei, wenn das Fernbedienungsdienst-Bereitstellungsmenü ausgewählt wird, der Fernbedienungs-Proxy-Server (226-2) eine dritte Fernbedienungsdienst-Seite bereitstellt, so dass die in dem Datenbank-Server registrierten Geräte (210) angezeigt werden.

14. Fernbedienungsdienst-Verarbeitungsgerät nach Anspruch 13, wobei, wenn eine Information bezüglich einer Fernbedienungsanforderung von dem bestimmten Gerät (218) in Bezug auf das mit der Kennung neu registrierte Gerät (210) empfangen wird, der Fernbedienungs-Proxy-Server (226-2) den Fernbedienungsbefehl sequenziell und in einem vorgegebenen Zeitintervall zu wenigstens einem der jeweiligen Geräte (210) in Bezug auf die abgeglichenen und mit der Kennung registrierten Funktionen sendet.

15. Fernbedienungsdienst-Verarbeitungsgerät nach Anspruch 8, wobei, wenn eine Information bezüglich der Auswahl aus dem Fernbedienungsdienst-Einstellungsmenü empfangen wird, der Fernbedienungs-Proxy-Server (226-2) eine vierte Fernbedienungsdienst-Seite bereitstellt, um das Gerät (210), das dem Steuerungs-Signal gemäß der Funktionsauswahl des jeweiligen Gerätes (210) entspricht, und die dem Steuerungs-Signal entsprechenden Funktionen separat anzuzeigen.

16. Fernbedienungsdienst-Verarbeitungsgerät nach Anspruch 15, wobei der Fernbedienungs-Proxy-Server (226-2) des Weiteren einen Bestätigungs-Knopf zum Bestätigen des Abschlusses der Einstellung in Bezug auf eine von der zweiten Fernbedienungsdienst-Seite ausgewählte Funktion bereitstellt, und
wenn die Bestätigungs-Schaltfläche ausgewählt wird, der Datenbank-Server (226-1) eine neue Kennung in Bezug auf das angezeigte Gerät (210) und die Funktion gemäß einem Steuerungs-Signal bezüglich der Auswahl der Geräte-Funktion erzeugt und das angezeigte Gerät (210) sowie die Funktion abgleicht und mit der erzeugten Kennung registriert.

17. Fernbedienungsdienst-Verarbeitungsgerät nach Anspruch 16, wobei der Datenbank-Server (226-1) die Kennung als eine Geräte-Kennung registriert.

18. Fernbedienungsdienst-Verarbeitungsgerät nach Anspruch 17, wobei, wenn eine Information bezüglich einer Fernbedienungsanforderung in Bezug auf ein mit der Kennung neu registriertes Gerät (210) empfangen wird, der Fernbedienungs-Proxy-Server (226-2) den Fernbedienungsbefehl sequenziell und in einem vorgegebenen Zeitintervall zu wenigstens einem der jeweiligen Geräte (210) in Bezug auf die abgeglichene und mit der Kennung registrierte Funktion sendet.

19. Fernbedienungsdienst-Verarbeitungsgerät nach Anspruch 18, wobei, wenn das Fernbedienungsdienst-Bereitstellungsmenü ausgewählt wird, der Fernbedienungs-Proxy-Server (226-2) den Fernbedienungsdienst bereitstellt, so dass die über den Datenbank-Server (226-1) registrierten Geräte (210) angezeigt werden können.

20. Fernbedienungsdienst-Verarbeitungsgerät nach Anspruch 19, wobei der Datenbank-Server (226-1) ein Icon für jedes Gerät (210) zuordnet.

21. Fernbedienungsdienst-Verarbeitungsgerät nach Anspruch 20, wobei der Fernbedienungs-Proxy-Server (226-2) den Fernbedienungsdienst so bereitstellt, dass das bestimmte Gerät (218) das Icon eines der Geräte (210), die fernbedient werden sollen, während der Ausführung der Funktion des bestimmten Gerätes (218) auswählen kann.

22. Fernbedienungsdienst-Verarbeitungsgerät nach Anspruch 21, wobei, wenn eine Information bezüglich der Auswahl eines der Icons von dem bestimmten Gerät (218) empfangen wird, der Fernbedienungs-Proxy-Server (226-2) eine fünfte Fernbedienungsdienst-Seite bereitstellt, so dass das Gerät (210) und die dem ausgewählten Icon entsprechende Funktion miteinander abgeglichen und angezeigt werden können.

23. Fernbedienungsdienst-Verarbeitungsgerät nach Anspruch 1, wobei das bestimmte Gerät (218) ein Gerät mit einer Anzeigeeinrichtung ist.

24. Fernbedienungsdienst-Verarbeitungsgerät nach Anspruch 23, wobei das Fernbedienungsdienst-Verarbeitungsgerät das bestimmte Gerät (218) ist.

## Revendications

1. Dispositif de traitement pour services télécommandés (220) dans un environnement de réseau domotique comprenant :
- une interface (222) pour un échange de données entre une pluralité de types de services (210) qui sont conçus pour répondre à une instruction de télécommande reçue par le réseau ;
- une unité de stockage (224) qui stocke des informations de liste de services télécommandés qui représentent une fonction répondant à un dispositif de télécommande des dispositifs (210) respectifs connectés dans le réseau ; et
- une unité de commande (226) qui est adaptée à recueillir les informations de liste de services télécommandés à partir des dispositifs (210) respectifs, pour stocker les informations de liste de services télécommandés recueillies dans l'unité de stockage (224) et fournir à un certain dispositif (218) dans le réseau un service télécommandé afin de télécommander au moins un des dispositifs (210) respectifs par une interface graphique utilisateur,
- dans lequel l'unité de commande (226) comprend un serveur proxy de télécommande (226-2) adapté à faire correspondre des informations dans l'unité de stockage (224) avec les dispositifs (210) respectifs et à fournir une page de services télécommandés de sorte que des fonctions respectives puissent être affichées ensemble,
- et le serveur proxy de télécommande (226-2) est en outre configuré pour enregistrer, lorsque les fonctions de plusieurs dispositifs sont sélectionnées par l'utilisateur simultanément et que le signal de confirmation de sélection est reçu, les fonctions des dispositifs sélectionnés dans l'unité de stockage (224), en tant que nouveaux dispositifs ou identificateurs, de sorte qu'une seule instruction de sélection puisse remplacer plusieurs instants de manipulation de dispositifs de télécommande pour faire fonctionner plusieurs dispositifs (210).

2. Dispositif de traitement pour services télécommandés selon la revendication 1, dans lequel l'unité de commande (226) comprend :
- un serveur de base de données (226-1) qui recueille les informations de liste de services télécommandés et gère les informations recueillies ;
- dans lequel le serveur proxy de télécommande (226-2), qui fournit au certain dispositif (218) le service télécommandé conformément aux informations de liste de services télécommandés recueillies par le serveur de base de données (226-1), lors de la réception depuis le certain dispositif (218) d'une demande de télécommande par le service télécommandé, lit une instruction de télécommande depuis le serveur de base de données (226-1) conformément à la demande de télécommande et transmet l'instruction de télécommande au dispositif (210) correspondant.

3. Dispositif de traitement pour services télécommandés selon la revendication 2, dans lequel le serveur de base de données (226-1) mappe une icône en correspondance avec chaque dispositif (210).

4. Dispositif de traitement pour services télécommandés selon la revendication 3, dans lequel le serveur proxy de télécommande (226-2) fournit le service télécommandé de façon à permettre au certain dispositif (218) de sélectionner par l'icône un dispositif (210) pour la télécommande.

5. Dispositif de traitement pour services télécommandés selon la revendication 4, dans lequel le serveur proxy de télécommande (226-2) fournit un outil de sélection de représentation par une icône en tant que service télécommandé, avec lequel un utilisateur peut afficher sélectivement l'icône.

6. Dispositif de traitement pour services télécommandés selon la revendication 5, dans lequel, lorsque des informations concernant la sélection de l'icône sont reçues depuis le certain dispositif (218), le serveur proxy de télécommande (226-2) fournit le service télécommandé de sorte qu'une page de services télécommandés puisse être affichée pour afficher la liste de services télécommandés du dispositif (210) correspondant à l'icône.

7. Dispositif de traitement pour services télécommandés selon la revendication 2, dans lequel le serveur proxy de télécommande (226-2) fournit au certain dispositif (218) un article de sélection de service télécommandé sous la forme d'une liste, ainsi que d'autres services disponibles.

8. Dispositif de traitement pour services télécommandés selon la revendication 7, dans lequel, lorsque des informations concernant la sélection à partir de l'article de service télécommandé sont reçues à partir de la liste de services, le serveur proxy de télécommande (226-2) fournit un menu d'établissement de service télécommandé pour que l'utilisateur établisse les fonctions des dispositifs (210) respectifs dans le réseau et fournit une première page de services télécommandés pour afficher un menu de fourniture de services télécommandés pour les fonctions des dispositifs (210) enregistrées par le menu d'établissement de service télécommandé.

9. Dispositif de traitement pour services télécommandés selon la revendication 8, dans lequel, lorsque des informations concernant la sélection à partir du menu d'établissement de service télécommandé sont reçues, le serveur proxy de télécommande (226-2) fournit une deuxième page de services télécommandés qui fait correspondre les listes de fonctions des dispositifs (210) respectifs avec les dispositifs (210) et représente le résultat.

10. Dispositif de traitement pour services télécommandés selon la revendication 9, dans lequel, lorsqu'un signal de commande est reçu en entrée conformément à la sélection de fonctions des dispositifs (210) respectifs dans un état dans lequel la deuxième page de services télécommandés est affichée, le serveur proxy de télécommande (226-2) fournit le service télécommandé de sorte qu'une fonction correspondant au signal de commande parmi la liste de services télécommandés affichée sur la deuxième page de services télécommandés puisse être représentée en marquage.

11. Dispositif de traitement pour services télécommandés selon la revendication 10, dans lequel le serveur proxy de télécommande (226-2) fournit en outre la deuxième page de services télécommandés avec un bouton de confirmation pour confirmer l'achèvement de l'établissement en ce qui concerne la fonction sélectionnée, et
- lorsque le bouton de confirmation est sélectionné, le serveur de base de données (226-1) génère un nouvel identificateur en ce qui concerne les fonctions en marquage et les dispositifs (210) respectifs, fait correspondre et enregistre les fonctions en marquage avec l'identificateur généré.

12. Dispositif de traitement pour services télécommandés selon la revendication 11, dans lequel le serveur de base de données (226-1) enregistre l'identificateur en tant qu'identificateur de dispositif.

13. Dispositif de traitement pour services télécommandés selon la revendication 12, dans lequel, lorsque le menu de fourniture de services télécommandés est sélectionné, le serveur proxy de télécommande (226-2) fournit une troisième page de services télécommandés de sorte que les dispositifs (210) enregistrés dans le serveur de base de données soient affichés.

14. Dispositif de traitement pour services télécommandés selon la revendication 13, dans lequel, lorsque des informations concernant une demande de télécommande sont reçues depuis le certain dispositif (218) par le dispositif (210) nouvellement enregistré avec l'identificateur, le serveur proxy de télécommande (226-2) transmet l'instruction de télécommande séquentiellement et dans un intervalle de temps prédéterminé à au moins un des dispositifs (210) respectifs en ce qui concerne les fonctions faites correspondre et enregistrées avec l'identificateur.

15. Dispositif de traitement pour services télécommandés selon la revendication 8, dans lequel, lorsque des informations concernant la sélection à partir du menu d'établissement de service télécommandé sont reçues, le serveur proxy de télécommande (226-2) fournit une quatrième page de services télécommandés pour afficher séparément le dispositif (210) correspondant au signal de commande conformément à la sélection de la fonction du dispositif (210) respectif, et les fonctions correspondant au signal de commande.

16. Dispositif de traitement pour services télécommandés selon la revendication 15, dans lequel le serveur proxy de télécommande (226-2) fournit en outre un bouton de confirmation pour confirmer l'achèvement de l'établissement en ce qui concerne une fonction sélectionnée à partir de la deuxième page de services télécommandés, et
- lorsque le bouton de confirmation est sélectionné, le serveur de base de données (226-1) génère un nouvel identificateur en ce qui concerne le dispositif (210) et la fonction affichés conformément à un signal de commande concernant la sélection de la fonction du dispositif et fait correspondre et enregistre lesdits dispositif (210) et fonction affichés avec l'identificateur généré.

17. Dispositif de traitement pour services télécommandés selon la revendication 16, dans lequel le serveur de base de données (226-1) enregistre l'identificateur en tant qu'identificateur de dispositif.

18. Dispositif de traitement pour services télécommandés selon la revendication 17, dans lequel, lorsque des informations sont reçues concernant une demande de télécommande en ce qui concerne un dispositif (210) nouvellement enregistré avec l'identificateur, le serveur proxy de télécommande (226-2) transmet l'instruction de télécommande à au moins un des dispositifs (210) respectifs séquentiellement et dans un intervalle de temps prédéterminé en ce qui concerne la fonction faite correspondre et enregistrée avec l'identificateur.

19. Dispositif de traitement pour services télécommandés selon la revendication 18, dans lequel, lorsque le menu de fourniture de services télécommandés est sélectionné, le serveur proxy de télécommande (226-2) fournit le service télécommandé de sorte que les dispositifs (210) enregistrés par le serveur de base de données (226-1) puissent être affichés.

20. Dispositif de traitement pour services télécommandés selon la revendication 19, dans lequel le serveur de base de données (226-1) mappe une icône pour chaque dispositif (210).

21. Dispositif de traitement pour services télécommandés selon la revendication 20, dans lequel le serveur proxy de télécommande (226-2) fournit le service télécommandé de sorte que le certain dispositif (218) puisse sélectionner l'icône d'un desdits dispositifs (210) voulu pour la télécommande durant l'exécution de la fonction du certain dispositif (218).

22. Dispositif de traitement pour services télécommandés selon la revendication 21, dans lequel, lorsque des informations concernant la sélection d'une desdites icônes sont reçues depuis le certain dispositif (218), le serveur proxy de télécommande (226-2) fournit une cinquième page de services télécommandés de sorte que le dispositif (210) et la fonction correspondant à l'icône sélectionnée puissent correspondre l'un à l'autre et être affichés.

23. Dispositif de traitement pour services télécommandés selon la revendication 1, dans lequel le certain dispositif (218) est un dispositif comportant un affichage.

24. Dispositif de traitement pour services télécommandés selon la revendication 23, dans lequel ledit dispositif de traitement pour services télécommandés est ledit certain dispositif (218).
